# EUROPÄISCHE PATENTSCHRIFT

(11) **EP 2 167 341 B1**
(45) Veröffentlichungstag und Bekanntmachung des Hinweises auf die Patenterteilung: **31.08.2011**
(21) Anmeldenummer: 08759059.2
(22) Anmeldetag: 06.06.2008
(51) Int. Cl.: B60K 15/04, F01P 11/18

(54) **VERSCHLUSSORGAN FÜR EINEN KRAFTSTOFFTANK EINES KRAFTFAHRZEUGS**
CLOSURE ELEMENT FOR A FUEL TANK OF A MOTOR VEHICLE
ÉLÉMENT DE FERMETURE D'UN RÉSERVOIR DE CARBURANT D'UN VÉHICULE AUTOMOBILE

(30) Priorität: 19.07.2007 DE 102007033535
(43) Veröffentlichungstag der Anmeldung: 31.03.2010
(73) Patentinhaber: Bayerische Motoren Werke Aktiengesellschaft, 80809 München (DE)
(72) Erfinder: DEMMER, Stefan, 80937 München (DE)
(86) Internationale Anmeldenummer: PCT/EP2008/004514
(87) Internationale Veröffentlichungsnummer: WO 2009/010130

(56) Entgegenhaltungen:
- EP-A- 1 155 896
- DE-A1-102007 011 891
- US-A- 4 944 323

## Beschreibung

Die Erfindung betrifft ein Verschlussorgan für einen Kraftstofftank eines Kraftfahrzeugs, das von einer Bedienperson zum Befüllen des Tanks von diesem oder von einem Einfüllstutzen desselben zumindest abschnittsweise entfernbar ist, wobei im Kraftstoff-Tank ein zumindest geringfügiger Überdruck und/oder Unterdruck herrschen kann. Zum technischen Umfeld wird neben der gattungsbildenden EP-A-1 155 896, der DE 100 35 729 A1 sowie der EP 0 163 006 A1 auf die nicht vorveröffentlichte deutsche Patentanmeldung 10 2007 011 891 verwiesen.

Bei üblichen Kraftstofftanks wird über eine Be- bzw. Entlüftungsöffnung bzw. Entlüftungseinrichtung unter anderem beim Befüllen des Kraftstofftanks die zuvor darin enthaltene Luft abgeführt, wobei die im abgeführten Luftstrom enthaltenen Kraftstoffbestandteile in einem sog. Aktivkohlefilter, durch welches der abgeführte Luftstrom hindurchgeführt wird, zwischengespeichert werden können, um eine Belastung der Umwelt durch diese unverbrannten Kraftstoffbestandteile zu vermeiden. Im Aktivkohlefilter zwischengespeichert werden ferner auch Kraftstoffdämpfe, die aus der Verdunstung von Kraftstoff im Kraftstofftank des insbesondere unter Umgebungs-Hitze betriebenen, aber auch heiß abgestellten Kraftfahrzeugs resultieren, da als Folge dieser Verdunstung kein nennenswerter Überdruck im Kraftstofftank entstehen darf und somit auch unter diesen Umständen eine Entlüftung des Tanks über das Aktivkohlefilter erfolgen muss.

Das genannte Aktivkohlefilter muss immer wieder gespült werden, wobei Umgebungsluft hindurchgeführt und zusammen mit den dann vom Aktivkohlefilter wieder abgegebenen Kraftstoffbestandteilen einer Brennkraftmaschine des Kraftfahrzeugs, für deren Versorgung der Kraftstofftank vorgesehen ist, zur Verbrennung zugeführt wird. Diese geschilderte Technik hat sich grundsätzlich bewährt, ist jedoch bspw. bei sog. Hybrid-Kraftfahrzeugen, die alternativ zu einer Brennkraftmaschine auch von einem Elektromotor (oder einem anderen Motor, der nicht aus dem Kraftstofftank versorgt wird, angetrieben werden können, praktisch nicht identisch umsetzbar, da es hierbei im Fahrbetrieb des Fahrzeugs lange Zeitspannen geben kann, während derer die Brennkraftmaschine nicht betrieben wird und somit eine wirkungsvolle bzw. zuverlässige Spülung des Aktivkohlefilters nicht möglich ist.

Bspw. in DE 41 02 961 ist bereits vorgeschlagen, ein Zustandekommen und Aufrechterhalten von Überdruck gewisser Höhe im geschlossenen Kraftstofftank zuzulassen. Dieser Überdruck kann insbesondere mit mehr oder weniger gefülltem Kraftstofftank auftreten, bspw. wenn dieser (unter Umgebungseinfluss und/oder durch die Abwärme der Abgasanlage der Fahrzeug-Brennkraftmaschine) erwärmt wird und kein Kraftstoff entnommen wird. Bein einem im vorhergehenden Absatz genannten Hybrid-Kfz tritt dies dann ein, wenn das Kraftfahrzeug elektromotorisch betrieben und der elektrische Fzg.-Antriebsmotor aus einem Akkumulator gespeist wird. Die durch den äußeren Wärmeeintrag resultierende Verdunstung des Kraftstoffs im Tank erhöht dessen Innendruck, was nun jedenfalls bis zu einem gewissen Druckwert zugelassen werden kann, so dass bis dahin keine Entlüftung bzw. Belüftung des Tanks erforderlich ist. Folglich wird dann ein ggf. noch vorhandenes Aktivkohlefilter nicht durchströmt. Vorteilhafterweise reduziert der im Kraftstofftank vorliegende Überdruck zusätzlich die Verdunstungsneigung des Kraftstoffs.

Jedoch ist es dann, wenn im Kraftstofftank Überdruck herrscht, nicht mehr möglich, diesen ebenso einfach zu befüllen bzw. zu betanken wie die üblichen nicht geschlossenen Kraftstofftanks, in denen aufgrund von Zwangsentlüftung kein Überdruck im Tank auftreten kann. Würde nämlich bei Vorliegen von Überdruck im Tank ein üblicher Verschluss eines üblichen Tank-Einfüllrohres geöffnet, so erfolgte ein schlagartiger Druckabbau, verbunden mit der Gefahr, dass Kraftstoff hinausschwappt, insbesondere jedoch mit entsprechender Belastung der Umwelt mit den im Tank angesammelten gasförmigen Kraftstoffbestandteilen.

Als Abhilfemaßnahme hierfür ist in der eingangs genannten nicht vorveröffentlichten deutschen Patentanmeldung 10 2007 011 891 ein Kraftfahrzeug-Tanksystem mit einem Tank und einem Einfüllrohr hierfür vorgeschlagen, das mittels einer gegen ein Öffnen verriegelbaren Verschlussvorrichtung druckdicht verschließbar ist und wobei eine Verriegelungsvorrichtung für die Verschlussvorrichtung ein Öffnen derselben nur dann erlaubt, wenn im Tank im wesentlichen kein Überdruck gegenüber Umgebungsdruck vorliegt. Dabei kann der Fahrer des Fahrzeugs oder ein Tankwart auf den Verriegelungszustand der Verschlussvorrichtung optisch hingewiesen werden.

In diesem technischen Umfeld, d.h. für ein Verschlussorgan eines Kraftstofftanks nach dem Oberbegriff des Anspruchs 1 eine weitere Verbesserung aufzuzeigen, ist Aufgabe der vorliegenden Erfindung.

Die Lösung dieser Aufgabe ist dadurch gekennzeichnet, dass am Verschlussorgan oder nahe desselben eine Anzeige vorgesehen ist, mit welcher die Bedienperson auf das Vorliegen von Überdruck und/oder Unterdruck im Tank hingewiesen wird. Vorteilhafte Aus- und Weiterbildungen sind Inhalt der Unteransprüche.

Zunächst wurde erkannt, dass es möglicherweise überhaupt nicht erforderlich ist, das Verschlussorgan bei Vorliegen von Überdruck (oder auch von Unterdruck) im Kraftstofftank zu verriegeln; es ist nämlich durchaus möglich, dass sich dieses Verschlussorgan unter diesen Umständen überhaupt nicht öffnen lässt. In einem solchen Fall - aber nicht nur in diesem - soll eine Bedienperson, die das Verschlussorgan öffnen möchte und bei der es sich vorzugsweise um den Fahrer des Kraftfahrzeugs oder einen Tankwart handeln kann, ausdrücklich darauf hingewiesen werden, dass im Tank ein Überdruck oder ein Unterdruck vorliegt. Selbstverständlich ist ein solcher Hinweis auch dann hilfreich, wenn das Verschlussorgan aufgrund des Vorliegens von Überdruck verriegelt ist. Üblicherweise dürfte im Falle eines vorgesehenen Betankens des Kraftfahrzeugs (und somit bei vorgesehenem Öffnen des Tank-Verschlussorgans) selbsttätig ein Belüftungsvorgang initiiert werden, jedoch ist dies nicht Inhalt der vorliegenden Erfindung. Vorliegend wird vielmehr vorgeschlagen, eine sog. Bedienperson auf möglichst einfache Weise darauf hinzuweisen, wenn der Kraftstofftank aktuell noch nicht geöffnet, d.h. das Verschlussorgan aktuell noch nicht vom Tank-Einfüllstutzen oder dgl. abnehmbar ist, weil im Kraftstofftank noch Überdruck oder Unterdruck herrscht.

Besonders einfach und insbesondere ohne Zuhilfenahme von Elektrizität, welche grundsätzlich von einem Tank-Einfüllstutzen fern zu halten ist, kann die Anzeige von Überdruck oder Unterdruck (gegenüber Umgebungsdruck) über einen mechanischen Druckfühler auf mechanischem Weg erfolgen. Hierfür kann der besseren Offensichtlichkeit halber vorzugsweise im Verschlussorgan eine über einen unter Einfluss des im Tank herrschenden Drucks gegen Federkraft verlagerbaren Stift verdrehbare Anzeigewalze vorgesehen sein, von welcher ein den jeweils herrschenden Druck repräsentierendes Mantelsegment durch ein Sichtfenster für die Bedienperson erkennbar ist.

Die besagte Anzeige bezüglich des Vorliegens von im wesentlichen Umgebungsdruck und/oder Überdruck und/oder Unterdruck kann über unterschiedliche Farben erfolgen, bspw. derart, dass eine rote Farbe auf das Vorliegen von Überdruck (oder Unterdruck) hinweist, während eine grüne Farbe symbolisiert, dass im Tank im wesentlichen Umgebungsdruck herrscht und dieser bzw. das Verschlussorgan somit geöffnet werden kann. Zusätzlich oder alternativ kann ein entsprechender/geeigneter Schriftzug (Text) vorgesehen sein. Im übrigen kann am oder im Verschlussorgan ein mechanisches Sperrorgan angreifen oder vorgesehen sein, welches durch Überdruck oder Unterdruck im Tank mechanisch aktiviert (bspw. über eine Verzahnung) ein Öffnen des Verschlussorgans verhindert, so wie dies an Kraftfahrzeugen bspw. für den Ausgleichsbehälter für das Kühlmittel einer flüssigkeitsgekühlten Brennkraftmaschine bereits bekannt ist (vgl. die eingangs zweitgenannte Schrift).

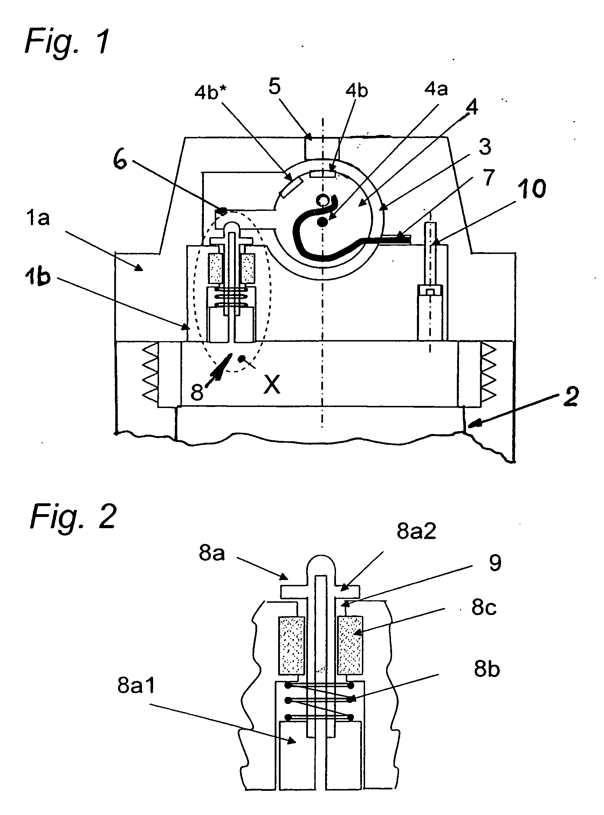

Die beigefügte Prinzipskizze (Fig.1) zeigt ein bevorzugtes Ausführungsbeispiel im Schnitt; dessen mechanischer Druckfühler ist in Fig.2 als Ausschnitt X aus Fig.1 vergrößert dargestellt.
Mit der Bezugsziffer 1 ist ein auf einen Einfüllstutzen 2 eines im übrigen nicht dargestellten Kraftstofftanks eines Kraftfahrzeugs aufgesetztes Verschlussorgan in Form eines grundsätzlich üblichen Tankdeckels, bspw. mit einem Bajonettverschluss, gekennzeichnet. Im Kopfteil 1a dieses Verschlussorgans 1 ist in einer gegenüber dem Einfüllstutzen 2 (bzw. den Tank-Innenraum) mittels eines sog. Fußteils 1b, das über Schrauben 10 am Kopfteil 1a befestigt ist, abgedichteten Aussparung 3 eine Anzeigewalze 4 um ihre Achse 4a verdrehbar gelagert. Dabei ist ein Mantelsegment 4b dieser Anzeigewalze 4 über ein im Kopfteil 1a vorgesehenes Sichtfenster 5 nach außen, nämlich zu einer Bedienperson hin, die dieses Verschlussorgan 1 zumindest abschnittsweise vom Einfüllstutzen 2 abnehmen bzw. entfernen möchte, sichtbar. An dieser Anzeigewalze 4 greift ein Hebel 6 sowie eine als Spiralfeder ausgebildete Rückstellfeder 7 an.

Auf den Hebel 6 kann ein in seiner Gesamtheit mit der Bezugsziffer 8 gekennzeichneter, im Fußteil 1 b angeordneter mechanischer Druckfühler auf mechanischem Weg einwirken, derart, dass bei Vorliegen von nennenswertem Überdruck (gegenüber Umgebungsdruck) im Tank die Anzeigewalze 4 geringfügig gegenüber ihrer Position bei Umgebungsdruck im Tank um ihre Achse 4a verdreht ist. Dieser mechanische Druckfühler 8 kann bspw. ähnlich der bei Dampfdruckkochtöpfen bekannten Druckanzeige gestaltet sein, mit einem linear gegen die Kraft eines Federelements 8b verlagerbaren Stift 8a, auf dessen Kopfteil 8a1 einerseits der Druck innerhalb des Einfüllstutzens 2 einwirkt und hierzu entgegen gerichtet das Federelement 8b, und auf dessen Fußteil 8a2 der Hebel 6 der Anzeigewalze 4 abgestützt ist. Unter Zwischenlage eines Dichtelements 8c ist dieser Stift 8a in einer Bohrung 9 im Verschlussorgan 1 geführt, wobei - um eine Verlagerung des Stiftes 8a durch Überdruck im Einfüllstutzen 2 zu ermöglichen - die dem Fußteil 8a2 zugewandte freie und von besagtem Überdruck beaufschlagbare Fläche des Kopfteiles 8a1 kleiner ist als die in den Figuren untere, dem Fußteil 8a2 abgewandte Fläche des Kopfteils 8a1. Somit wird der Stift 8a ausgehend von seiner Position bei Umgebungsdruck im Tank in den Figurendarstellungen nach oben verschoben, wenn im Tank ein Überdruck herrscht, wodurch die Anzeigewalze 4 ausgehend von der dargestellten Position soweit im Uhrzeigersinn verdreht wird, dass anstelle des in der dargestellten Position von außen durch das Sichtfenster 5 sichtbaren, bspw. grünen Mantelsegments 4b der Anzeigewalze 4 ein anderes bspw. rotes Mantelsegment 4b* von außen durch das Sichtfenster 5 hindurch sichtbar wird, wobei noch darauf hingewiesen sei, dass dies sowie eine Vielzahl weiterer Details durchaus abweichend von obigen Erläuterungen gestaltet sein kann, ohne den Inhalt der Patentansprüche zu verlassen.

## Patentansprüche

1. Verschlussorgan (1) für einen Kraftstofftank eines Kraftfahrzeugs, das von einer Bedienperson zum Befüllen des Tanks von diesem oder von einem Einfüllstutzen (2) desselben zumindest abschnittsweise entfernbar ist, wobei im Kraftstoff-Tank ein zumindest geringfügiger Überdruck und/oder Unterdruck herrschen kann, **dadurch gekennzeichnet, dass** am Verschlussorgan (1) oder nahe desselben eine Anzeige vorgesehen ist, mit welcher die Bedienperson auf das Vorliegen von Überdruck und/oder Unterdruck im Tank hingewiesen wird.

2. Verschlussorgan nach Anspruch 1, **dadurch gekennzeichnet, dass** die Anzeige über einen mechanischen Druckfühler (8) auf mechanischem Weg erfolgt.

3. Verschlussorgan nach Anspruch 1 oder 2, **dadurch gekennzeichnet, dass** die Anzeige bezüglich des Vorliegens von im wesentlichen Umgebungsdruck und/oder Überdruck und/oder Unterdruck über unterschiedliche Farben erfolgt.

4. Verschlussorgan nach einem der vorangegangenen Ansprüche, **dadurch gekennzeichnet, dass** im Verschlussorgan (1) eine über einen unter Einfluss des im Tank herrschenden Drucks gegen Federkraft verlagerbaren Stift (8a) verdrehbare Anzeigewalze (4) vorgesehen ist, von welcher ein den jeweils herrschenden Druck repräsentierendes Mantelsegment (4b, 4b*) durch ein Sichtfenster (5) für die Bedienperson erkennbar ist.

5. Verschlussorgan nach einem der vorangegangenen Ansprüche, **dadurch gekennzeichnet, dass** am oder im Verschlussorgan ein mechanisches Sperrorgan angreift oder vorgesehen ist, welches durch Überdruck oder Unterdruck im Tank mechanisch aktiviert ein Öffnen des Verschlussorgans verhindert.

## Claims

1. A closure element (1) for a fuel tank of a motor vehicle, which, to fill the tank, can be removed from the latter or from a filler neck (2) thereof, at least in portions, by an operator, wherein an at least slight excess pressure and/or negative pressure may prevail in the fuel tank, **characterised in that** a display, with which the presence of excess pressure and/or negative pressure in the tank is indicated to an operator, is provided on the closure element (1) or close to it.

2. A closure element according to claim 1, **characterised in that** the display takes place by a mechanical method by means of a mechanical pressure sensor (8).

3. A closure element according to claim 1 or 2, **characterised in that** the display with regard to the presence of substantially ambient pressure and/or excess pressure and/or negative pressure takes place by means of different colours.

4. A closure element according to any one of the preceding claims, **characterised in that** a display roller (4), which can be rotated by means of a pin (8a) that can be displaced against spring force under the influence of the pressure prevailing in the tank and of which a jacket segment (4b, 4b*) representing the respectively prevailing pressure is visible to an operator through a viewing window (5), is provided in the closure element (1).

5. A closure element according to any one of the preceding claims, **characterised in that** a mechanical locking element engages or is provided on or in the closure element and, mechanically activated by excess pressure or negative pressure in the tank, prevents the closure element from opening.

## Revendications

1. Elément de fermeture (1) de réservoir à carburant de véhicule automobile destiné à être enlevé au moins en partie par un utilisateur pour remplir le réservoir, par rapport au réservoir ou à son ajutage (2), et au moins une légère pression et/ou dépression pouvant régner dans le réservoir à carburant,
**caractérisé en ce qu'**
un moyen indicateur est prévu sur l'élément de fermeture (1) ou au voisinage de celui-ci pour informer l'utilisateur de l'existence d'une pression et/ou d'une dépression dans le réservoir.

2. Elément de fermeture selon la revendication 1,
**caractérisé en ce que**
le moyen d'affichage comporte un capteur mécanique de pression (8) assurant un affichage mécanique.

3. Elément de fermeture selon la revendication 1 ou 2,
**caractérisé en ce que**
le moyen d'affichage se fait avec des couleurs différentes concernant l'existence d'une pression et/ou d'une dépression ou d'une pression pratiquement égale à la pression ambiante.

4. Elément de fermeture selon l'une des revendications précédentes,
**caractérisé en ce que**
l'élément de fermeture (1) comporte un tambour d'affichage (4) tourné par une broche (8a) déplacée par une force de ressort sous l'influence de la pression régnant dans le réservoir, le tambour présentant à travers une fenêtre (5) pour l'utilisateur, un segment d'enveloppe (4b, 4b*) représentant la pression qui règne.

5. Elément de fermeture selon l'une des revendications précédentes,
**caractérisé en ce que**
l'organe de verrouillage mécanique agit sur ou dans l'élément de fermeture ou est prévu sur celui-ci et il est mécaniquement activé en cas de pression ou de dépression régnant dans le réservoir, pour éviter l'ouverture de l'élément de fermeture.
